# EUROPÄISCHE PATENTSCHRIFT

(11) **EP 3 149 356 B1**
(45) Veröffentlichungstag und Bekanntmachung des Hinweises auf die Patenterteilung: **22.08.2018**
(21) Anmeldenummer: 15721579.9
(22) Anmeldetag: 08.05.2015
(51) Int. Cl.: F16F 15/03, B60G 11/23, B60G 15/06, B60G 17/02

(54) **ROTATIONSDÄMPFER**
ROTATION DAMPER
AMORTISSEUR DE ROTATION

(30) Priorität: 26.05.2014 DE 102014007956
(43) Veröffentlichungstag der Anmeldung: 05.04.2017
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2015/000949
(87) Internationale Veröffentlichungsnummer: WO 2015/180823

(56) Entgegenhaltungen:
- EP-A1- 1 354 731
- EP-A1- 2 077 406
- EP-A1- 2 329 970
- US-A1- 2006 017 251

## Beschreibung

Die Erfindung betrifft einen Rotationsdämpfer, der ein Dämpfergehäuse, das einen entlang einer zentralen Achse des Rotationsdämpfers angeordneten elektro-magnetischen Dämpfermotor mit einem gehäusefesten Stator und einem darin drehbar gelagerten Rotor sowie Mittel zur Erzeugung eines Magnetfelds an dem Rotor und dem Stator umgibt und über einen mit dem Dämpfergehäuse drehfest verbundenen Befestigungsteil an einer ersten Masse zu befestigen ist, und einen Anlenkhebel, der mit einer zweiten Masse verbundenen ist, eine mit dem Anlenkhebel verbunde Lagerwelle zur Lagerung des Anlenkhebels in dem Rotationsdämpfer, sowie ein Getriebe zum Übertragen und/oder Wandeln einer relativen Drehbewegung zwischen dem Befestigungsteil an der ersten Masse und dem Anlenkhebel an der zweiten Masse auf den Dämpfermotor zur Schwingungsdämpfung aufweist.

Die DE 10 2009 048 818 A1 offenbart einen elektrischen Rotationsdämpfer zum Dämpfen der Relativbewegung zwischen einer ersten und einer zweiten Masse, umfassend einen durch die Massenbewegung angetriebenen Generator, wobei der Generator in ein Getriebe integriert ist, wobei ein einen Stator bildendes erstes Getriebeelement durch die Massebewegung in Drehung versetzt wird, worüber ein einen Rotor bildendes zweites Getriebeelement, das mit dem ersten Getriebeelement direkt oder indirekt übersetzt gekoppelt ist, gedreht wird, wobei entweder am ersten oder am zweiten Getriebeelement Mittel zur Erzeugung eines Magnetfelds vorgesehen sind. Bei diesem Rotationsdämpfer erfolgt die Drehmomentabstützung über zwei feste Verschraubungspunkte zur Karosserie. Da die beiden Verschraubungspunkte zur Abstützung des Drehmoments eine Mindest-Abstützbreite haben müssen, kommt es aufgrund der über die Hebelarme eingeleiteten Kräfte zu einer axialen Belastung an dem Rotationsdämpfer, wodurch die Funktionsfähigkeit des Rotationsdämpfers beeinträchtigt wird.

DE 10 2011 102 743 A1 zeigt ein Kraftfahrzeug mit mehreren über Radaufhängungen fahrzeugkarosserieseitig anbringbaren oder angebrachten Fahrzeugrädern, wobei eine Radaufhängung wenigstens einen ein Fahrzeugrad mit einer Fahrzeugkarosserie verbindenden, um eine Achse schwenkbar gelagerten Lenker, und wenigstens einen Rotationsdämpfer mit wenigstens einem Dämpferelement zum Dämpfen der Relativbewegung zwischen einer radaufhängungsseitig angeordneten ersten Masse und einer fahrzeugkarosserieseitig angeordneten zweiten Masse, wobei der Rotationsdämpfer direkt in die Lagerung des Lenkers integriert ist, wobei durch die Massenbewegung herbeigeführte Schwenkbewegungen des Lenkers auf ein mit diesem bewegungsgekoppeltes drehbares Dämpferteil des Dämpferelements über-tragbar sind.

DE 10 2011 009 608 A1 offenbart einen elektrischen Dämpfer zum Dämpfen der Relativbewegung zwischen einer ersten und einer zweiten Masse, umfassend einen durch die Massenbewegung angetriebenen Generator mit einem feststehenden Stator und einem relativ dazu drehbaren Rotor, und ein mit dem Generator gekoppeltes Getriebe, wobei durch die Massenbewegung wenigstens ein direkt mit einem durch die Massenbewegung bewegbaren Hebelelement verbundenes erstes Getriebeelement in eine Drehbewegung versetzt wird, welches erste Getriebeelement mit wenigstens einem weiteren Getriebeelement direkt oder indirekt übersetzt bewegungsgekoppelt ist, wobei das zweite Getriebeelement mit dem Rotor des Generators bewegungsgekoppelt ist, derart, dass eine Drehbewegung des Rotors relativ zum Stator erfolgt.

DE 10 2011 101 701 A1 offenbart einen Rotationsdämpfer für ein Kraftfahrzeug, umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse. An dem Rotationsdämpfer ist wenigstens ein Schwingungstilger angeordnet. Das Dämpferelement umfasst ein feststehendes erstes Dämpferteil und ein unter Ausbildung einer Dämpfkraft relativ dazu drehbar gelagertes, mit einem durch die Massenbewegung bewegbaren, mit der ersten Masse verbundenen Hebelelement verbundenes zweites Dämpferteil. Das Hebelelement überträgt bei einer Massenbewegung eine Drehbewegung auf das zweite Dämpferteil, wobei der wenigstens eine Schwingungstilger an dem zweiten Dämpferteil und/oder dem Hebelelement angeordnet ist. DE 10 2011 101 350 A1 zeigt einen Rotationsdämpfer für ein Kraftfahrzeug, umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse, wobei das Dämpferelement wenigstens ein drehbares Dämpferteil aufweist, welches über ein mit diesem mechanisch bewegungsgekoppeltes, durch die Massenbewegung bewegbares Hebelelement in eine Drehbewegung versetzbar ist, wobei in die mechanische Bewegungskopplung zwischen Hebelelement und drehbarem Dämpferteil wenigstens ein Federdämpferelement integriert ist.

DE 602 26 122 T2, das als nächstliegender Stand der Technik gegenüber dem Gegenstand des Anspruchs 1 angesehen wird, zeigt eine Anordnung zur Dämpfungssteuerung in einer Fahrzeugaufhängung, wobei eine Aufhängungsanordnung für jedes Rad mindestens zwei Lenker aufweist, die ein Rad mit einem Fahrzeugfahrgestell verbinden, und wobei eine Torsionsfedereinheit Teil eines der Lenker ist. Die Aufhängung weist ferner eine Blattfeder auf. Die Torsionsfedereinheit hat eine einstellbare Torsionsfeder, einen Aktuator, der so angeordnet ist, dass er auf die Torsionsfeder wirkt, und einen Drehungsdämpfer, der mit der Torsionsfeder durch ein Anbringungsteilstück gegenseitig verbunden ist, wobei der Drehungsdämpfer und die Torsionsfeder mit dem Fahrgestell verbunden sind und das Anbringungsteilstück mit dem Lenker verbunden ist und wobei der Aktuator so angeordnet ist, dass er die Torsionsfeder vorspannt und die Blattfeder in eine vorbestimmte Position vorbelastet sowie Schwingungen in der Aufhängung relativ zur vorbestimmten Position dämpft.

Der Erfindung liegt die Aufgabe zugrunde, einen Rotationsdämpfer bereitzustellen, bei dem die an dem Anlenkhebel auftretenden Axialkräfte besser abgestützt werden können.

Dazu ist der erfindungsgemäße Rotationsdämpfer dadurch gekennzeichnet, dass der Befestigungsteil mit dem Dämpfergehäuse drehfest verbunden ist, wobei der Befestigungsteil an der Lagerwelle über ein Rollenlager zwischen der Lagerwelle und dem Befestigungsteil, und ein Rollenlager zwischen dem Dämpfergehäuse und dem Rotor sowie ein weiteres Rollenlager zwischen dem Rotor und der Lagerwelle drehbar auf dieser gelagert ist. Durch diese Konstruktion des erfindungsgemäßen Rotationsdämpfers wird eine breite Abstützbasis zwischen dem Anlenkhebel und der Lagerwelle geschaffen, wodurch die an dem Anlenkhebel auftretenden Axialkräfte besser abgestützt werden können. Ferner ist es vorteilhaft, dass eine Befestigung des Rotationsdämpfers über ein äußeres Gehäuseteil, nämlich den Befestigungsteil, möglich wird, was ebenfalls zu einer schonenderen Einleitung der Kräfte in den Rotationsdämpfer beiträgt, da die Lagerwelle stabil in diesem Befestigungsteil aufgenommen ist. Schließlich kann in vorteilhafter Weise bei dem erfindungsgemäßen Rotationsdämpfer eine kleinere Bauhöhe, insbesondere ein kleinerer Durchmesser des Dämpfergehäuses, verwirklicht werden. Durch das Rollenlager zwischen der Lagerwelle und dem Rotor des Dämpfermotors einerseits und das Rollenlager zwischen dem Rotor des Dämpfermotors und dem Dämpfergehäuse andererseits, wird in vorteilhafter Weise die stabile Lagerung des Befestigungsteils mit dem Dämpfergehäuse auf der Lagerwelle sichergestellt.

Nach einer weiteren vorteilhaften Ausführungsform ist der erfindungsgemäße Rotationsdämpfer dadurch gekennzeichnet, dass der Befestigungsteil Befestigungsösen zur Befestigung an einer Masse bzw. der Karosserie, aufweist. Da die Befestigung des Rotationsdämpfers über ein äußeres Gehäuseteil, nämlich den Befestigungsteil, erfolgt, können in vorteilhafter Weise die Befestigungsmittel zur Befestigung des Rotationsdämpfers an der Karosserie durch leicht zugängliche Befestigungsösen erfolgen.

Nach einer weiteren vorteilhaften Ausführungsform ist der erfindungsgemäße Rotationsdämpfer dadurch gekennzeichnet, dass die Lagerwelle einen axial verlaufenden Lageransatz mit einer außenseitigen Lagerfläche zur Befestigung des Anlenkhebels aufweist. Damit wird in vorteilhafter Weise eine vergrößerte Abstützbasis für den Anlenkhebel an der Lagerwelle geschaffen.

Nach einer weiteren vorteilhaften Ausführungsform ist der erfindungsgemäße Rotationsdämpfer dadurch gekennzeichnet, dass die Lagerwelle einen radial verlaufenden Umfangsflansch zur axialen Abstützung des Anlenkhebels aufweist, der in montiertem Zustand zwischen dem Anlenkhebel und dem Befestigungsteil liegt und das Rollenlager zwischen dem Befestigungsteil und der Lagerwelle abdeckt. Dadurch wird in vorteilhafter Weise eine axiale Abstützung des Anlenkhebels und eine Abstützung des Rollenlagers zwischen dem Befestigungsteil und der Lagerwelle erreicht.

Nach einer weiteren vorteilhaften Ausführungsform ist der erfindungsgemäße Rotationsdämpfer dadurch gekennzeichnet, dass die Lagerwelle auf Seiten des Dämpfermotors eine axial verlaufende Lagerachse aufweist, an der der Rotor des Dämpfermotors über ein Rollenlager drehbar gelagert ist. Dadurch wird in vorteilhafter Weise eine sichere radiale Abstützung des Dämpfermotors an der Lagerwelle erreicht

Nach einer weiteren vorteilhaften Ausführungsform ist der erfindungsgemäße Rotationsdämpfer dadurch gekennzeichnet, dass die axial verlaufenden Lagerachse eine Bohrung aufweist, in die ein Schraubenbolzen eingesetzt ist, wobei ein Schraubenkopf des Schraubenbolzens am dem Rotor des Dämpfungsmotors abgestützt ist, sodass durch Festziehen des Schraubenbolzens eine axiale Verspannung der Lagerwelle gegenüber dem Befestigungsteil erfolgt, wodurch eine stabile und einfache Verspannung der Bauteile des Rotationsdämpfers erreicht wird, indem der Schraubbolzen in der Bohrung der Lagerwelle festgezogen wird.

Nach einer weiteren vorteilhaften Ausführungsform ist der erfindungsgemäße Rotationsdämpfer dadurch gekennzeichnet, dass der Schraubenkopf über eine Hülse an dem Rollenlager des Rotors des Dämpfungsmotors abgestützt ist, wodurch in vorteilhafter Weise die Kraft von dem Schraubenkopf auf das Lager zwischen der Lagerwelle und dem Rotor des Dämpfermotors erreicht wird.

Nach einer weiteren vorteilhaften Ausführungsform ist der erfindungsgemäße Rotationsdämpfer dadurch gekennzeichnet, dass das Getriebe ein Spannungswellengetriebe ist, das eine eine Innenverzahnung aufweisende starre Einheit, und eine eine Außenverzahnung aufweisende flexible Einheit und einen in der flexiblen Einheit drehbar gelagerten, ovalen Wellengenerator aufweist, durch dessen Drehung die flexible Einheit verformbar ist, wobei die beiden Einheiten des Getriebes formschlüssig über die Verzahnungen miteinander gekoppelt sind. Das Spannungswellengetriebe eignet sich vorteilhaft zur Integration mit dem erfindungsgemäßen Rotationsdämpfer, weil dies platzsparend zwischen dem Dämpfermotor und dem auf dem Befestigungsteil gelagerten Teilen des Rotationsdämpfers angeordnet werden kann.

Nach einer weiteren vorteilhaften Ausführungsform ist der erfindungsgemäße Rotationsdämpfer dadurch gekennzeichnet, dass die flexible Einheit mit dem Befestigungsteil und die starre Einheit mit dem Anlenkhebel und mit dem Dämpfergehäuse verbunden sind, wodurch die Integration des Spannungswellengetriebes in den erfindungsgemäßen Rotationsdämpfer vereinfacht wird, in dem bei dem erfindungsgemäßen Rotationsdämpfer die stabile und zuverlässige Einleitung der Drehbewegung des Anlenkhebels gegenüber dem Befestigungsteil auf das Spannungswellengetriebe zuverlässig eingeleitet werden kann.

Nach einer weiteren vorteilhaften Ausführungsform ist der erfindungsgemäße Rotationsdämpfer gekennzeichnet durch ein Polygonprofil zur drehfesten, formschlüssigen Verbindung zwischen der Wellengenerator und der Lagerwelle, wobei der Wellengenerator gegenüber der Lagerwelle axial verschieblich ist, wodurch in vorteilhafter Weise einerseits eine sichere drehfeste Verbindung zwischen dem Wellengenerator und der Lagerwelle und andererseits eine Verspannung des Befestigungsteils mit der Lagerwelle ermöglicht wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
Fig. 1 eine Schnittdarstellung des erfindungsgemäßen Rotationsdämpfers entlang einer Ebene in Längsrichtung des Rotationsdämpfers;
Fig. 2 eine Schnittdarstellung des erfindungsgemäßen Rotationsdämpfers entlang der Linie B-B in Fig. 1; und
Fig. 3 eine perspektivische Darstellung des erfindungsgemäßen Rotationsdämpfers.

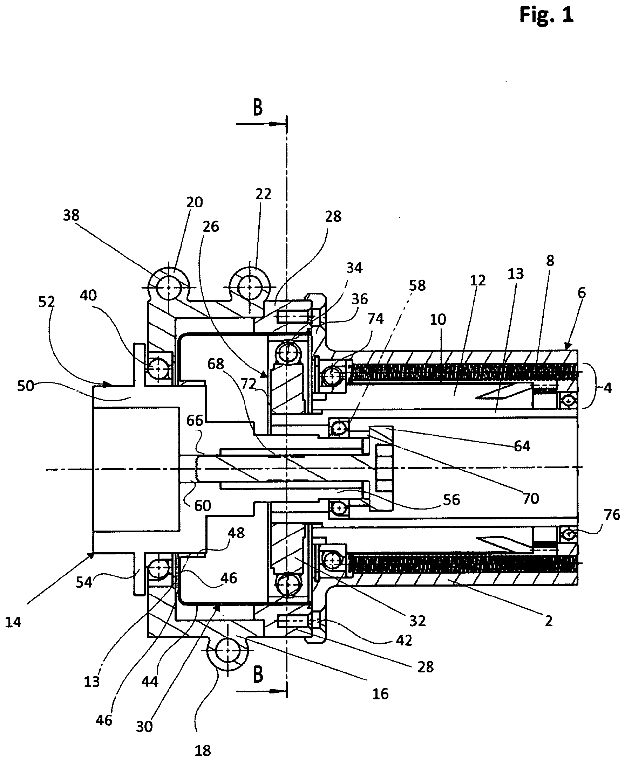

Ein Rotationsdämpfer weist gemäß Fig. 1 ein Dämpfergehäuse 2 auf, das einen elektromagnetischen Dämpfermotor 4 umgibt, der einen Stator 6 und einen in dem Stator 6 angeordneten Rotor 10 sowie Mittel zur Erzeugung eines Magnetfeldes an dem Rotor 10 und dem Stator 6 umfasst. Der Stator 6 hat eine bestrombare Spule 8 während der Rotor 10 einen Magneten 12 hat, wie dies bei derartigen Dämpfermotoren 4 üblich ist. Der Rotor 10 ist auf einer mit dem Dämpfergehäuse 2 koaxialen Lagerwelle 14 drehbar gelagert, während der Stator 6 an dem Dämpfergehäuse 2 befestigt ist.

Der Rotationsdämpfer ist über ein Befestigungsteil 16 an einer Karosserie zu befestigen und weist dazu Befestigungsösen 18, 20, 22 auf. Ein Anlenkhebel 18 des Rotationsdämpfers ist mit der Radaufhängung (nicht gezeigt) verbunden.

Ein Spannungswellengetriebe 26 ist zum Übertragen und/oder Wandeln einer relativen Drehbewegung zwischen den Massen auf den Dämpfermotor 4 zur Schwingungsdämpfung vorgesehen.

Das Spannungswellengetriebe 26 umfasst eine eine Innenverzahnung aufweisende, starre Einheit 28 und eine eine Außenverzahnung aufweisende, flexible Einheit 30 und einen in der flexiblen Einheit 30 drehbar gelagerten, ovalen Wellengenerator 32, durch dessen Drehung die flexible Einheit 30 verformbar ist, wobei die beiden Einheiten 28, 30 formschlüssig über die Verzahnungen miteinander gekoppelt sind. Zwischen der flexiblen Einheit 30 und dem Wellengenerator 32 ist ein flexibles Wälzlager 34 angeordnet.

Der Rotor 10 des Spannungswellengetriebes 26 ist über ein Rollenlager 40 drehbar an der Lagerwelle 14 gelagert. Die starre Einheit 28 ist einerseits mit dem Anlenkhebel 28 und andererseits mit einer radialen Wand 36 des Dämpfergehäuses 2 mit Schrauben 42 verschraubt, während der Wellengenerator 32 mit dem Rotor 10 des Dämpfermotors 4 verbunden ist.

Die flexible Einheit 30 ist mit der Lagerwelle 14 verbunden, die mit dem Anlenkhebel 24 drehfest verbunden ist. Zur Verbindung der flexiblen Einheit 30 mit der Lagerwelle 14 weist die flexible Einheit 30 einen axialen Wandabschnitt 44, einen radialen Wandabschnitt 46 und einen an der Lagerwelle 14 befestigten weiteren axialen Wandabschnitt 48 auf.

Die flexible Einheit 30 bildet somit einen flexiblen Topf als Bestandteil des Spannungswellengetriebes 26. Bei einer Ein-/Ausfederbewegung des Rades wird der Anlenkhebel 24 gegenüber dem Dämpfergehäuse 2 bzw. dem Befestigungsteil 16 um einen Winkel geschwenkt. Infolge dieser Schwenkbewegung wird von dem Dämpfermotor 4 eine rückstellende Kraft und dadurch eine Dämpfungskraft erzeugt.

Wie aus dem Schnitt der Fig. 1 zu ersehen ist, umfasst die Lagerwelle 14 einen axial verlaufenden Lageransatz 50 mit einer außenseitigen Lagerfläche 52 zur Befestigung des Anlenkhebels 24. Angrenzend an die Lagerfläche 52 umfasst die Lagerwelle einen radial verlaufenden Umfangsflansch 54 zur axialen Abstützung des Anlenkhebels 24.

Die Lagerwelle 14 weist auf Seiten des Dämpfermotors 4 eine axial verlaufende Lagerachse 56 auf, an der der Rotor 10 des Dämpfermotors 4 über ein Rollenlager 58 drehbar gelagert ist. Die Lagerachse 56 hat eine Bohrung 60, in die ein Schraubenbolzen 62 eingreift, wobei ein Schraubenkopf 64 des Schraubenbolzens 62 an dem Rotor 10 des Dämpfermotors 4 abgestützt ist. Durch Festziehen des Schraubenbolzens 64 wird die Lagerwelle 14 gegenüber dem Befestigungsteil 16 axial verspannt, wobei die Bohrung 60 der Lagerachse 14 ein Innengewinde 66 und der Schraubbolzen 62 ein entsprechendes Außengewinde 68 aufweist, sodass die Verspannung durch Ineinandergreifen der Gewinde erfolgen kann. Der Schraubenkopf 64 ist über eine Hülse 70 an dem Rollenlager 58 des Rotors 10 des Dämpfermotors 4 abgestützt.

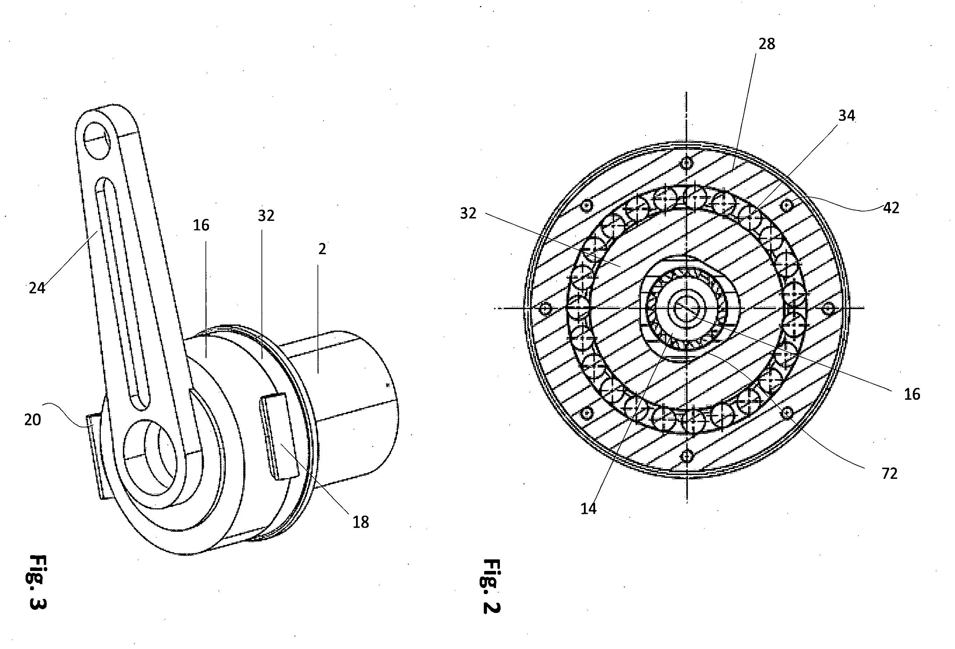

Der Wellengenerator 32 ist mit der Lagerwelle 14 durch ein Polygonprofil drehfest verbunden, wie in Fig. 2 dargestellt ist. Die drehfeste Verbindung über das Polygonprofil 72 ist eine formschlüssige Verbindung der beiden Elemente, nämlich der Lagerwelle 14 und dem Wellengenerator 32, lässt jedoch eine axiale Verschiebung zwischen diesen Teilen zu, sodass beim Verspannen des Anlenkhebels 24 das Spannungswellengetriebe 26 keine axialen Kräfte erfährt. Durch den Schraubenbolzen 62 wird somit die Lagerwelle 14 samt dem darin ausgebildeten Anlenkhebel 24 axial vorgespannt.

Indem der Rotor 10 des Dämpfermotors 4 an dem Dämpfergehäuse 2 über ein Rollenlager 74 drehbar gelagert ist, wird die drehbare Lagerung des Befestigungsteils mit dem Dämpfergehäuse gegenüber der Lagerwelle 14 durch die beiden Rollenlager 58 und 74 vervollständigt. Die Rotorachse 13 ist über ein Rollenlager 76 an dem Stator 6 gelagert, wobei das Rollenlager 74 an einem Ende des Stators 6 und das Rollenlager 76 an dem anderen Ende des Stators 6 angeordnet ist.

Im Folgenden wird die Funktion des Spannungswellengetriebes beschrieben.

Wenn über den an der Lagerwelle 14 drehfest befestigten Anlenkhebel 24 eine Drehbewegung in den Rotationsdämpfer eingeleitet wird, dreht sich die flexible Einheit 30 innerhalb und relativ zu der starren Einheit 20. Da die starre Einheit 28 an dem Dämpfergehäuse 2 befestigt ist, wird die Drehbewegung der flexiblem Einheit 30 auf den Wellengenerator 32 übertragen. Der Wellengenerator 32 ist seinerseits mit der Lagerwelle 14 drehfest verbunden, die ihrerseits den Magneten 12 des Dämpfermotors 4 trägt. Der Wellengenerator 32, die Lagerwelle 14 und der daran befestigte Magnet 12 stellen somit den Rotor des Dämpfermotors 4 dar. Durch das Übersetzungsverhältnis von 1:50 bedeutet eine Drehung der flexiblen Einheit 30 eine 50-fache Verdrehung des Wellengenerators 32 und damit des Rotors 10. Eine von dem Anlenkhebel 24 eingeleitete Bewegung kann somit zum Erzeugen von Strom genutzt werden, da sich die Spule 8 quer zu den von dem Magneten 12 erzeugten Feldlinien bewegt.

Die flexible Einheit 30 hat eine geringere Anzahl an Zähnen als die starre Einheit 28. Damit erzeugt der annähernd oval ausgebildete Wellengenerator 32 innerhalb der flexiblen Einheit 30 eine Wellenbewegung, die sich entlang der flexiblen Wände der flexiblen Einheit 30 über seinen Umfang ausbildet. Durch diese Wellenbewegung bewegt sich die flexible Einheit 30 rotatorisch innerhalb der starren Einheit 28.

Der Wellengenerator 32 ist mit der Lagerwelle 14 verbunden, die den Magneten 12 trägt, der als Dauermagnet ausgebildet ist.

Die Erfindung ist nicht auf die gezeigten Ausführungsbeispiele eingeschränkt sondern umfasst Rotationsdämpfer, die unter den Schutzumfang der Ansprüche fallen. Insbesondere können andere Arten von Dämpfungsmotoren als elektromagnetische Dämpfungsmotoren und andere Arten von Getrieben als Spannungswellengetriebe eingesetzt werden, ohne den Umfang der Ansprüche zu verlassen.

## Patentansprüche

1. Rotationsdämpfer, der ein Dämpfergehäuse (2), das einen entlang einer zentralen Achse (X) des Rotationsdämpfers angeordneten elektromagnetischen Dämpfermotor (4) mit einem gehäusefesten Stator (6) und einem darin drehbar gelagerten Rotor (10) sowie Mittel zur Erzeugung eines Magnetfelds an dem Rotor (10) und dem Stator (6) umgibt und über einen mit dem Dämpfergehäuse (2) drehfest verbundenen Befestigungsteil (16) an einer ersten Masse zu befestigen ist, und einen Anlenkhebel (24), der mit einer zweiten Masse verbundenen ist, eine mit dem Anlenkhebel (24) verbunde Lagerwelle (14) zur Lagerung des Anlenkhebels (24) in dem Rotationsdämpfer, sowie ein Getriebe (26) zum Übertragen und/oder Wandeln einer relativen Drehbewegung zwischen dem Befestigungsteil (16) an der ersten Masse und dem Anlenkhebel (24) an der zweiten Masse auf den Dämpfermotor (4) zur Schwingungsdämpfung aufweist,
**dadurch gekennzeichnet, dass**
der Befestigungsteil (16) mit dem Dämpfergehäuse (2) an der Lagerwelle (14) drehbar gelagert ist. wobei der Befestigungsteil (16) an der Lagerwelle (14)über ein Rollenlager (40) zwischen der Lagerwelle (14) und dem Befestigungsteil (16), und ein Rollenlager (74) zwischen dem Dämpfergehäuse (2) und dem Rotor (10) sowie ein weiteres Rollenlager (58) zwischen dem Rotor (10) und der Lagerwelle (14) drehbar auf dieser gelagert ist.

2. Rotationsdämpfer nach Anspruch 1, **dadurch gekennzeichnet, dass** der Befestigungsteil (16) Befestigungsösen (18, 20, 22) zur Befestigung an einer Masse bzw. der Karosserie, aufweist.

3. Rotationsdämpfer nach Anspruch 1 oder 2, **dadurch gekennzeichnet, dass** die Lagerwelle (14) einen axial verlaufenden Lageransatz (50) mit einer außenseitigen Lagerfläche (52) zur Befestigung des Anlenkhebels (24) aufweist.

4. Rotationsdämpfer nach Anspruch 3, **dadurch gekennzeichnet, dass** die Lagerwelle (14) einen radial verlaufenden Umfangsflansch (54) zur axialen Abstützung des Anlenkhebels (24) aufweist.

5. Rotationsdämpfer nach Anspruch 3 oder 4, **dadurch gekennzeichnet, dass** die Lagerwelle (14) auf Seiten des Dämpfermotors (4) eine axial verlaufenden Lagerachse (56) aufweist, an der der Rotor (10) des Dämpfermotors (4) über ein Rollenlager (58) drehbar gelagert ist.

6. Rotationsdämpfer nach Anspruch 5, **dadurch gekennzeichnet, dass** die axial verlaufenden Lagerachse (56) eine Bohrung (60) aufweist, in die ein Schraubenbolzen (62)eingreift, wobei ein Schraubenkopf (64) des Schraubenbolzens (62) am dem Rotor (10) des Dämpfungsmotors (4) abgestützt ist, sodass durch Festziehen des Schraubenbolzens (64) eine axiale Verspannung der Lagerwelle (14) gegenüber dem Befestigungsteil (16) erfolgt.

7. Rotationsdämpfer nach Anspruch 6, **dadurch gekennzeichnet, dass** der Schraubenkopf (64) über eine Hülse (70) an dem Rollenlager (58) des Rotors (10) des Dämpfungsmotors (4) abgestützt ist.

8. Rotationsdämpfer nach einem der Ansprüche 1 bis 7, **dadurch gekennzeichnet, dass** das Getriebe (26) ein Spannungswellengetriebe ist, das eine eine Innenverzahnung aufweisende starre Einheit (28), und eine eine Außenverzahnung aufweisende flexible Einheit (30) und einen in der flexiblen Einheit (30) drehbar gelagerten, ovalen Wellengenerator (32) aufweist, durch dessen Drehung die flexible Einheit (30) verformbar ist, wobei die beiden Einheiten (28, 30) des Getriebes (26) formschlüssig über die Verzahnungen miteinander gekoppelt sind.

9. Rotationsdämpfer nach Anspruch 8, **dadurch gekennzeichnet, dass** die flexible Einheit (30) mit dem Befestigungsteil (16) und die starre Einheit (28) mit dem Anlenkhebel (24) und mit dem Dämpfergehäuse (2) verbunden sind.

10. Rotationsdämpfer nach Anspruch 8, **gekennzeichnet durch** ein Polygonprofil (72) zur drehfesten, formschlüssigen Verbindung zwischen der Wellengenerator (32) und der Lagerwelle (14), wobei der Wellengenerator (32) gegenüber der Lagerwelle (14) axial verschieblich ist.

## Claims

1. Rotation damper which has a damper housing (2), which encloses an electromagnetic damper motors (4) disposed along a central axis (X) of the rotation damper, with a stator (6) fixed to the housing and a rotor (10) rotatably mounted therein as well as means for generating a magnetic field at the rotor (10) and the stator (6), and which is to be fixed via a fastening part (16) non-rotatably connected with the damper housing (2) to a first mass, and an articulation lever(24) which is connected with the second mass, a bearing shaft (14) connected with the articulation lever (24) for mounting the articulation lever (24) in the rotation damper, and a gear (26) for transmitting and/or converting a relative turning movement between the fastening part (16) to the first mass and the articulation lever (24) to the second mass onto the damper motor (4) for shock absorption,
**characterised in that**
the fastening part (16) with the damper housing (2) is rotatably mounted at the bearing shaft (14), wherein the fastening part (16) is mounted to the bearing shaft (14) via a roller bearing (40) between the bearing shaft (14) and the fastening part (16), and a roller bearing (74) between the damper housing (2) and the rotor (10) and a further roller bearing (58) between the rotor (10) and the bearing shaft (14) is rotatably mounted thereupon.

2. Rotation damper according to claim 1, **characterised in that** the fastening part (16) has fastening rings (18, 20, 22) for fastening to a mass or the chassis.

3. Rotation damper according to claim 1 or 2, **characterised in that** the bearing shaft (14) has an axially extending support shoulder (50) with an outer sided support surface (52) for fastening the articulation lever (24).

4. Rotation damper according to claim 3, **characterised in that** the bearing shaft (14) has a radially extending circumferential flange (54) for the axial support of the articulation lever (24).

5. Rotation damper according to claim 3 or 4, **characterised in that** the bearing shaft (14) on the sides of the damper motor (4) has an axially extending support axis (56) at which the rotor (10) of the damper motor (4) is rotatably mounted via a roller bearing (58).

6. Rotation damper according to claim 5, **characterised in that** the axially extending support axis (56) has a hole (60) in which a screw bolt (62) engages, wherein a screw head (64) of the screw bolt (62) is supported at the rotor (10) of the damper motor (4), so that by tightening the screw bolt (64) there results an axial tensioning of the bearing shaft (14) with respect to the fastening part (16).

7. Rotation damper according to claim 6, **characterised in that** the screw head (64) is supported by a sleeve (70) at the roller bearing (58) of the rotor (10) of the damper motor (4).

8. Rotation damper according to one of claims 1 to 7, **characterised in that** the gear (26) is a tension shaft gear which has a rigid unit (28) having an internal toothing, and a flexible unit (30) having an external toothing and, rotatably mounted in the flexible unit (30), an oval shaft generator (32) through the turning of which the flexible unit (30) can be deformed, wherein the two units (28, 30) of the gear (26) are formed-fittingly coupled with one another by means of the toothings.

9. Rotation damper according to claim 8, **characterised in that** the flexible unit (30) is connected with the fastening part (16) and the rigid unit (28) is connected with the articulation lever (24) and with the damper housing (2)

10. Rotation damper according to claim 8, **characterised by** a polygon profile (72) for the non-rotational, form-fitting connection between the shaft generator (32) and the bearing shaft (14), wherein the shaft generator (32) is axially slidable with respect to the bearing shaft (14).

## Revendications

1. Amortisseur de rotation qui présente un boîtier d'amortisseur (2) qui entoure un moteur d'amortisseur (4) électromagnétique agencé le long d'un axe central (X) de l'amortisseur de rotation avec un stator (6) fixé au boîtier et un rotor (10) logé de manière rotative dedans ainsi que des moyens pour la génération d'un champ magnétique sur le rotor (10) et le stator (6) et est à fixer par le biais d'une partie de fixation (16) raccordée sans pouvoir tourner au boîtier d'amortisseur (2) sur une première masse, et un levier d'articulation (24) qui est raccordé à une seconde masse présente un arbre de palier (14) raccordé au levier d'articulation (24) pour le logement du levier d'articulation (24) dans l'amortisseur de rotation, ainsi qu'un engrenage (26) pour la transmission et/ou la conversion d'un mouvement rotatif relatif entre la partie de fixation (16) sur la première masse et le levier d'articulation (24) sur la seconde masse sur le moteur d'amortisseur (4) pour l'amortissement de vibrations,
**caractérisé en ce que**
la partie de fixation (16) est logée de manière rotative avec le boîtier d'amortisseur (2) sur l'arbre de palier (14), dans lequel la partie de fixation (16) est logée sur l'arbre de palier (14) par le biais d'un palier à rouleaux (40) entre l'arbre de palier (14) et la partie de fixation (16), et un palier à rouleaux (74) entre le boîtier d'amortisseur (2) et le rotor (10) ainsi qu'un autre palier à rouleaux (58) entre le rotor (10) et l'arbre de palier (14) de manière rotative sur celui-ci.

2. Amortisseur de rotation selon la revendication 1, **caractérisé en ce que** la partie de fixation (16) présente des oeillets de fixation (18, 20, 22) pour la fixation sur une masse ou la carrosserie.

3. Amortisseur de rotation selon la revendication 1 ou 2, **caractérisé en ce que** l'arbre de palier (14) présente une saillie de palier (50) s'étendant axialement avec une surface de palier (52) côté extérieur pour la fixation du levier d'articulation (24).

4. Amortisseur de rotation selon la revendication 3, **caractérisé en ce que** l'arbre de palier (14) présente une bride périphérique (54) s'étendant radialement pour l'appui axial du levier d'articulation (24).

5. Amortisseur de rotation selon la revendication 3 ou 4, **caractérisé en ce que** l'arbre de palier (14) présente sur des côtés du moteur d'amortisseur (4) un axe de palier (56) s'étendant axialement sur lequel le rotor (10) du moteur d'amortisseur (4) est logé de manière rotative par le biais d'un palier à rouleaux (58).

6. Amortisseur de rotation selon la revendication 5, **caractérisé en ce que** l'axe de palier (56) s'étendant axialement présente un perçage (60) dans lequel un boulon à vis (62) vient en prise, dans lequel une tête de vis (64) du boulon à vis (62) est en appui sur le rotor (10) du moteur d'amortissement (4) de sorte que par serrage du boulon à vis (64) une déformation axiale de l'arbre de palier (14) soit effectuée par rapport à la partie de fixation (16).

7. Amortisseur de rotation selon la revendication 6, **caractérisé en ce que** la tête de vis (64) est en appui par le biais d'une douille (70) sur le palier à rouleaux (58) du rotor (10) du moteur d'amortissement (4).

8. Amortisseur de rotation selon l'une quelconque des revendications 1 à 7, **caractérisé en ce que** l'engrenage (26) est un engrenage à ondes de contrainte qui présente une unité rigide (28) présentant une denture intérieure et une unité flexible (30) présentant une denture extérieure et un générateur d'ondes (32) ovale logé de manière rotative dans l'unité flexible (30), par la rotation duquel l'unité flexible (30) peut être déformée, dans lequel les deux unités (28, 30) de l'engrenage (26) sont couplées à complémentarité de formes par le biais des dentures l'une à l'autre.

9. Amortisseur de rotation selon la revendication 8, **caractérisé en ce que** l'unité flexible (30) est raccordée à la partie de fixation (16) et l'unité rigide (28) est raccordée au levier d'articulation (24) et au boîtier d'amortisseur (2).

10. Amortisseur de rotation selon la revendication 8, **caractérisé par** un profil de polygone (72) pour la liaison sans pouvoir tourner, à complémentarité de formes entre le générateur d'ondes (32) et l'arbre de palier (14), dans lequel le générateur d'ondes (32) est mobile axialement par rapport à l'arbre de palier (14).
